# EUROPÄISCHE PATENTSCHRIFT

(11) **EP 3 219 584 B1**
(45) Veröffentlichungstag und Bekanntmachung des Hinweises auf die Patenterteilung: **30.01.2019**
(21) Anmeldenummer: 17160354.1
(22) Anmeldetag: 10.03.2017
(51) Int. Cl.: B62D 15/02, B60W 30/188, B60W 50/00

(54) **VERFAHREN ZUM ZUMINDEST SEMI-AUTONOMEN EINPARKEN EINES KRAFTFAHRZEUGS, FAHRERASSISTENZSYSTEM SOWIE KRAFTFAHRZEUG**
METHOD FOR AT LEAST SEMI AUTOMATIC PARKING OF A MOTOR VEHICLE, DRIVER ASSISTANCE SYSTEM AND MOTOR VEHICLE
PROCÉDÉ DESTINÉ AU MOINS À LA MISE EN STATIONNEMENT SEMI-AUTOMATIQUE D'UN VÉHICULE AUTOMOBILE, SYSTÈME D'AIDE AU CONDUCTEUR ET VÉHICULE AUTOMOBILE

(30) Priorität: 14.03.2016 DE 102016104575
(43) Veröffentlichungstag der Anmeldung: 20.09.2017
(73) Patentinhaber: Valeo Schalter und Sensoren GmbH, 74321 Bietigheim-Bissingen (DE)
(72) Erfinder: AYYAPPAN, Thirumalai Kumarasamy, 74321 Bietigheim-Bissingen (DE)

(56) Entgegenhaltungen:
- EP-A1- 1 642 767
- US-A1- 2007 150 158

## Beschreibung

Die Erfindung betrifft ein Verfahren zum zumindest semi-autonomen Einparken eines Kraftfahrzeugs in eine Parklücke aufweisend einen ersten Bereich und einen gegenüber dem ersten Bereich erhöhten zweiten Bereich, wobei ein erstes Rad des Kraftfahrzeugs zum Durchführen eines ersten Überwindungsvorgangs eines Übergangs zwischen dem ersten Bereich und dem zweiten Bereich mit einem ersten Drehmoment beaufschlagt wird. Die Erfindung betrifft außerdem ein Fahrerassistenzsystem sowie ein Kraftfahrzeug.

Es ist bereits aus dem Stand der Technik bekannt, Kraftfahrzeuge zumindest semi-autonom zu manövrieren, um sie beispielsweise in eine Parklücke einzuparken. Beim semi-autonom Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch beschleunigt und abgebremst wird. Mittels eines solchen Fahrerassistenzsystems kann das Kraftfahrzeug beispielsweise zumindest semi-autonom eingeparkt werden. Dazu weisen solche Fahrerassistenzsysteme üblicherweise Sensoren auf, welche Parklücken beziehungsweise freie Stellplätze in einem Umgebungsbereich des Kraftfahrzeugs erkennen und vermessen können.

Dabei ist es auch bekannt, einen Fahrer beim Einparken in eine Parklücke zu unterstützen, welche einen ersten Bereich und einen gegenüber dem ersten Bereich erhöhten zweiten Bereich aufweist. Bei einer solchen Parklücke kann der erste Bereich beispielsweise auf einem Niveau einer Fahrbahn des Kraftfahrzeugs liegen und der zweite Bereich durch eine Stufe ausgebildet sein. Ein Übergang zwischen diesem ersten Bereich und dem zweiten Bereich kann beispielsweise durch eine Bordsteinkante beziehungsweise eine Randsteinkante ausgebildet sein. Dieser Übergang soll während des Einparkens von zumindest einem Rad des Kraftfahrzeugs überwunden werden.

Dazu ist aus der DE 10 2009 003 216 A1 beispielsweise ein Fahrerassistenzverfahren zum Auslösen einer vorbestimmten Aktion in Abhängigkeit eines erfassten Höhenprofils einer Fahrbahnoberfläche eines Kraftfahrzeugs bekannt. Wenn anhand des Höhenprofils ein Bordstein erfasst wurde, so kann beispielsweise eine Einparktrajektorie für das Kraftfahrzeug derart angepasst werden, dass sie in einem vorbestimmten Winkel über den Bordstein führt. In der EP 2 689 990 A2 ist beispielsweise ein Verfahren beschrieben, bei welchem eine Bordsteinüberfahrt eines Kraftfahrzeugs bei einem Rangiermanöver anhand einer fortlaufenden Auswertung einer Radgeschwindigkeit jedes Rades erkannt wird.

EP 1 642 767 A1 ist als nächstliegender Stand der Technik nach dem Oberbegriff des Anspruchs 1 zu sehen und offenbart ein Verfahren zur Einparkunterstützung für ein Fahrzeug vorgeschlagen, bei dem ein Fahrwiderstand des Fahrzeugs aus Messgrößen abgeleitet wird und eine Begrenzung einer Parklücke dann ermittelt wird, wenn sich der Fahrwiderstand über ein vorgegebenes Maß hinaus ändert.

Zum Überwinden des Übergangs wird ein Drehmoment auf das zumindest eine Rad des Kraftfahrzeugs übertragen. Dabei kann es vorkommen, dass das Drehmoment, welches für bei einem ersten Überwindungsversuch auf das zumindest eine Rad übertragen wird, nicht ausreicht und der erste Überwindungsversuch fehlschlägt.

Es ist Aufgabe der vorliegenden Erfindung, eine Lösung bereitzustellen, wie ein Kraftfahrzeug schnell und zuverlässig in eine Parklücke aufweisend zwei Bereiche mit unterschiedlichen Höhenniveaus zumindest semi-autonom eingeparkt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Bei einem erfindungsgemäßen Verfahren zum zumindest semi-autonomen Einparken eines Kraftfahrzeugs in eine Parklücke aufweisend einen ersten Bereich und einen gegenüber dem ersten Bereich erhöhten zweiten Bereich wird ein erstes Rad des Kraftfahrzeugs zum Durchführen eines ersten Überwindungsvorgangs eines Übergangs zwischen dem ersten Bereich und dem zweiten Bereich mit einem ersten Drehmoment beaufschlagt. Darüber hinaus wird zumindest ein zweites Rad des Kraftfahrzeugs mit einem im Vergleich zu dem ersten Drehmoment größeren zweiten Drehmoment zum Durchführen eines zweiten Überwindungsvorgangs des Übergangs beaufschlagt, falls erkannt wird, dass ein erster Versuch des ersten Überwindungsvorgangs des mit dem ersten Drehmoment beaufschlagten ersten Rads fehlgeschlagen ist, wobei das zweite Drehmoment für das zumindest eine zweite Rad in Abhängigkeit von zumindest einem das Kraftfahrzeug und/oder die Parklücke charakterisierenden Parameter bestimmt wird, wobei als der zumindest eine Parameter ein Reibungskoeffizient des ersten Bereiches bestimmt wird.

Mittels des Verfahrens kann ein Fahrerassistenzsystem realisiert werden, durch welches das Kraftfahrzeug zumindest semi-autonom in die Parklücke eingeparkt werden kann. Dies bedeutet, dass das Kraftfahrzeug semi-autonom oder autonom in die Parklücke eingeparkt wird. Das Kraftfahrzeug kann dabei sowohl in eine als eine Querparklücke ausgebildete Parklücke als auch in eine als Längsparklücke ausgebildete Parklücke eingeparkt werden. Die Parklücke kann beispielsweise anhand von Sensordaten einer fahrzeugseitigen Sensoreinrichtung erkannt und vermessen werden. Zu diesem Zweck kann das Kraftfahrzeug beispielsweise bewegt werden, während ein Umgebungsbereich des Kraftfahrzeugs mittels der Sensoreinrichtung insbesondere kontinuierlich erfasst wird. Die fahrzeugseitige Sensoreinrichtung kann beispielsweise ein Ultraschallsensor und/oder eine Kamera und/oder ein Laserscanner sein. Insbesondere kann mit der fahrzeugseitigen Sensoreinrichtung auch der Übergang zwischen dem ersten und dem zweiten Bereich der Parklücke, welcher insbesondere als eine Bordsteinkante ausgebildet ist, erkannt werden, und ein Abstand zwischen dem Kraftfahrzeug und dem Übergang erfasst werden.

Der Übergang ist dabei insbesondere derart in der Parklücke angeordnet, dass das Kraftfahrzeug nach Beendigung des Einparkvorgangs in einer Parkstellung zumindest teilweise auf dem zweiten Bereich platziert beziehungsweise positioniert ist. Insbesondere muss dazu der Übergang während des Einparkens von zumindest zwei Rädern des Kraftfahrzeugs überfahren beziehungsweise überwunden werden. Für den Einparkvorgang des Kraftfahrzeugs in die Parklücke kann beispielsweise eine Parktrajektorie bestimmt werden, entlang welcher sich das Kraftfahrzeug während des Einparkens zumindest semi-autonom bewegt. Die Parktrajektorie wird dabei beispielsweise ausgehend von dem Kraftfahrzeug durch den ersten Bereich hindurch führend, den Übergang kreuzend und in den zweiten Bereich führend bestimmt. Während des Einparkens werden das erste und das zumindest eine zweite Rad entlang der Parktrajektorie und damit nacheinander über den Übergang bewegt. Zum Überwinden des Übergangs, welcher ein Hindernis für die zumindest zwei Räder darstellt, muss dafür insbesondere ein bestimmtes Drehmoment auf die zumindest zwei Räder übertragen werden.

Dabei ist es nun vorgesehen, dass für das erste Rad, welches den Übergang zuerst überwindet, das erste Drehmoment bereitgestellt wird. Das erste Drehmoment kann beispielsweise in Abhängigkeit von zumindest einem Parameter der Parklücke und/oder des Kraftfahrzeugs vorherbestimmt werden und bei Beginn des ersten Übergangsvorgangs auf das erste Rad übertragen werden. Das mit dem ersten Drehmoment beaufschlagte Rad führt den ersten Versuch des ersten Überwindungsvorgangs durch. Dies bedeutet, dass das erste Rad, auf welches das erste Drehmoment übertragen wird, versucht, den Übergang zu überwinden und sich auf dem zweiten Bereich zu positionieren. Falls dieser erste Versuch des ersten Überwindungsvorgangs fehlschlägt, wird auf das erste Rad für einen zweiten Versuch des ersten Überwindungsvorgangs insbesondere ein erhöhtes erstes Drehmoment übertragen. Dies bedeutet, dass das auf das erste Rad übertragene Drehmoment für den zweiten Versuch im Vergleich zum ersten Versuch erhöht wird.

Für das zweite Rad wird nun für den zweiten Überwindungsvorgang nicht dasjenige erste Drehmoment bereitgestellt, bei welchem der durch das erste Rad durchgeführte erste Versuch des ersten Überwindungsvorgangs bereits fehlgeschlagen ist. Es wird nämlich davon ausgegangen, dass dieses erste Drehmoment auch für das zweite Rad zu niedrig ist und somit auch der zweite Überwindungsvorgang fehlschlagen wird. Vielmehr wird für das zweite Rad bereits bei einem ersten Versuch des zweiten Überwindungsvorgangs das zweite Drehmoment, welches im Vergleich zum ersten Drehmoment erhöht ist, bereitgestellt. Somit kann verhindert werden, dass während des Einparkens eine Vielzahl von Überwindungsversuchen durchgeführt werden muss.

Dazu wird das zweite Drehmoment für das zumindest eine zweite Rad in Abhängigkeit von zumindest einem das Kraftfahrzeug und/oder die Parklücke charakterisierenden Parameter bestimmt. Gemäß dieser alternativen Ausführungsform wird beispielsweise das erste Drehmoment für den zweiten Überwindungsversuch des ersten Rads erhöht, aber für den zweiten Überwindungsvorgang des zweiten Rads das zweite Drehmoment neu bestimmt. Das zweite Drehmoment wird so bestimmt, dass es größer als das erste Drehmoment des ersten Rads bei dem ersten Versuch des ersten Überwindungsvorgangs ist. Das zum erfolgreichen Durchführen des zweiten Überwindungsvorgangs erforderliche Drehmoment wird dabei in Abhängigkeit von zumindest einer Kenngröße der Parklücke, insbesondere einer Kenngröße des Übergangs, und/oder einer Kenngröße des Kraftfahrzeugs bestimmt. Das erforderliche Drehmoment kann beispielsweise von einer Steuereinrichtung des Fahrerassistenzsystems bestimmt werden.

Durch die Bestimmung des zweiten Drehmoments in Abhängigkeit von dem Parameter der Parklücke und/oder des Kraftfahrzeugs ergibt sich der Vorteil, dass das zweite Drehmoment individuell für das zumindest eine zweite Rad vorgegeben werden kann. Das zweite Drehmoment kann dabei so bestimmt werden, dass es einen minimalen, für die Überwindung erforderlichen Wert aufweist. Dadurch kann ein besonders angenehmer Einparkvorgang für den Fahrer des Kraftfahrzeugs bereitgestellt werden, da verhindert wird, dass das Kraftfahrzeug aufgrund eines zu hohen Drehmoments ruckartig abgebremst werden muss, um beispielsweise eine Kollision mit einem die Parklücke begrenzenden Objekt zu verhindern.

Als der zumindest eine Parameter wird ein Reibungskoeffizient des ersten Bereiches bestimmt. Beispielsweise kann dazu eine Beschaffenheit einer Fahrbahnoberfläche des ersten Bereiches erfasst werden und somit die Hafteigenschaften für das zweite Rad auf der Fahrbahnoberfläche bestimmt werden. Beispielsweise kann dazu von einer Sensoreinrichtung des Kraftfahrzeugs erfasst werden, ob die Fahrbahnoberfläche nass oder glatt ist. Das erforderliche Drehmoment für den zweiten Überwindungsvorgang des zweiten Rads wird an diese Beschaffenheit der Fahrbahnoberfläche angepasst, sodass der zweite Überwindungsvorgang des zumindest einen zweiten Rads auch dann erfolgreich ist, wenn die Fahrbahnoberfläche nass oder glatt ist.
Vorzugsweise wird das erste Drehmoment für das erste Rad für einen zweiten Versuch des ersten Überwindungsvorgangs erhöht und das erhöhte erste Drehmoment als das zweite Drehmoment für den zweiten Überwindungsvorgang des zumindest einen zweiten Rads bereitgestellt. Gemäß dieser Ausführungsform wird dasjenige erhöhte erste Drehmoment, welches für den durch das erste Rad durchgeführten zweiten Versuch des ersten Überwindungsvorgangs bereitgestellt wurde und mittels welchem das erste Rad in dem zweiten Versuch einen erfolgreichen ersten Überwindungsvorgang durchgeführt hat, für den zweiten Überwindungsvorgang des zweiten Rads verwendet. Das Verfahren ist somit besonders einfach gestaltet, da das Drehmoment für das zweite Rad nicht aufwendig bestimmt werden muss.

Dabei kann vorgesehen sein, dass als der zumindest eine Parameter eine Orientierung des Kraftfahrzeugs bezüglich der Parklücke bestimmt wird. Anhand der Orientierung kann insbesondere bestimmt werden, ob das Kraftfahrzeug einen Längsparkvorgang oder einen Querparkvorgang durchführt und/oder ob das Kraftfahrzeug vorwärts oder rückwärts in die Parklücke einparkt. Bei einem Längsparkvorgang schneidet die Parktrajektorie den Übergang unter einem anderen Winkel als bei einem Querparkvorgang. Das Drehmoment wird zum Bereitstellen eines erfolgreichen Überwindungsvorgangs also in Abhängigkeit von der Orientierung, insbesondere dem Winkel zwischen dem Übergang und Parktrajektorie, bestimmt.

Es erweist sich als vorteilhaft, wenn als der zumindest eine Parameter eine Antriebsvariante des Kraftfahrzeugs bestimmt wird. Anders ausgedrückt wird erfasst, ob das Kraftfahrzeug einen Vorderradantrieb, einen Hinterradantrieb oder einen Allradantrieb aufweist. In Abhängigkeit von der Antriebsvariante des Kraftfahrzeugs wird dann das zweite Drehmoment für den zweiten Überwindungsvorgang bestimmt.

Auch kann vorgesehen sein, dass als der zumindest eine Parameter ein Reibungskoeffizient des des zweiten Bereiches bestimmt wird. Beispielsweise kann dazu eine Beschaffenheit einer Fahrbahnoberfläche des zweiten Bereiches erfasst werden und somit die Hafteigenschaften für das zweite Rad auf der Fahrbahnoberfläche bestimmt werden. Beispielsweise kann dazu von einer Sensoreinrichtung des Kraftfahrzeugs erfasst werden, ob die Fahrbahnoberfläche nass oder glatt ist. Das erforderliche Drehmoment für den zweiten Überwindungsvorgang des zweiten Rads wird an diese Beschaffenheit der Fahrbahnoberfläche angepasst, sodass der zweite Überwindungsvorgang des zumindest einen zweiten Rads auch dann erfolgreich ist, wenn die Fahrbahnoberfläche nass oder glatt ist.

In einer weiteren Ausführungsform wird als der zumindest eine Parameter ein Reifendruck des zumindest einen zweiten Rads bestimmt wird. Der Reifendruck kann beispielsweise von einer fahrzeugseitigen Sensoreinrichtung erfasst werden und der Steuereinrichtung zum Bestimmten des zweiten Drehmomentes des zweiten Reifens bereitgestellt werden.

Des Weiteren kann eine Anzahl an erfolglosen Versuchen des ersten Überwindungsvorgangs des ersten Rads berücksichtigt werden. Dabei wird das zweite Drehmoment im Vergleich zum ersten Drehmoment insbesondere umso größer gewählt, je mehr erfolglose Überwindungsversuche durch das erste Rad durchgeführt wurden. Somit kann ebenfalls verhindert werden, dass ein erster Überwindungsversuch des zweiten Überwindungsvorgangs zumindest einen zweiten Rads fehlschlägt.

Insbesondere können vorgegebenen Werten des zumindest einen Parameters jeweilige Gewichtungsfaktoren zugeordnet werden, wobei einer der Gewichtungsfaktoren in Abhängigkeit von dem bestimmten Wert des zumindest einen Parameters ausgewählt wird, ein vorgegebenes Standarddrehmoment mit dem ausgewählten Gewichtungsfaktor gewichtet wird und das gewichtete Standarddrehmoment als das zweite Drehmoment bestimmt wird. Das Standarddrehmoment kann während eines Testeinparkvorgangs bestimmt werden und in einer fahrzeugseitigen Speichereinrichtung hinterlegt werden. Das Standarddrehmoment ist dabei insbesondere dasjenige Minimaldrehmoment, welches bei Vorliegen zumindest eines vorbestimmten Standardparameters, auf das zumindest eine zweite Rad übertragen werden muss, sodass der zweite Überwindungsvorgang erfolgreich durchgeführt werden kann. Der Standardparameter ist insbesondere ein Durchschnittswert, welcher aus Statistiken erhalten werden kann. Wenn der bestimmte, beispielsweise von der Sensoreinrichtung erfasste, Parameter dem Standardparameter entspricht, so beträgt der Gewichtungsfaktor für diesen Parameter eins und das erforderliche Drehmoment wird als das Standarddrehmoment vorgegeben. Wenn der bestimmte Parameter von dem Standardparameter abweicht, so beträgt der Gewichtungsfaktor für diesen Parameter einen von eins abweichenden Wert, mit welchem das Standarddrehmoment gewichtet beziehungsweise multipliziert wird. Das Standarddrehmoment, welches beispielsweise 250 Nm betragen kann, wird mittels des Gewichtungsfaktors dann verringert oder erhöht. Durch das Bereitstellen von vorbestimmten Gewichtungsfaktoren sowie durch Vorgeben des Standarddrehmoments kann das erforderliche Drehmoment besonders einfach und schnell bestimmt werden.

In einer Weiterbildung der Erfindung wird als der zumindest eine Parameter eine Anzahl an Rädern für den zweiten Überwindungsvorgang bestimmt. Beim Längsparken werden während des Einparkens die Räder einer Seite des Kraftfahrzeugs, beispielsweise einer Beifahrerseite des Kraftfahrzeugs, nacheinander über den Übergang bewegt. Beim Querparken werden die Räder einer Achse, beispielsweise beide Räder der Vorderachse oder beide Räder der Hinterachse, gleichzeitig über den Übergang bewegt. Somit führt insbesondere beim Längsparken nach Positionieren des ersten Rads auf dem zweiten Bereich nur ein zweites Rad den zweiten Überwindungsvorgang durch. Beim Querparken hingegen führen nach Positionieren der ersten Räder einer Achse zwei zweite Räder der zweiten Achse den zweiten Überwindungsvorgang durch. Durch das Berücksichtigen der Anzahl an Rädern, welche bei dem zweiten Überwindungsvorgang auf dem zweiten Bereich positioniert werden sollen, kann somit in vorteilhafter Weise das erforderliche zweite Drehmoment für die Überwindung des Übergangs besonders genau bestimmt werden.

In einer Weiterbildung der Erfindung wird eine Zeitdauer zumindest für den ersten Überwindungsvorgang des ersten Rads bestimmt und nach der Zeitdauer überprüft, ob der erste Versuch des ersten Überwindungsvorgangs fehlgeschlagen ist. Insbesondere wird eine Zeitdauer bestimmt, beispielsweise anhand von einer Länge der Parktrajektorie und einer Geschwindigkeit des Kraftfahrzeugs, nach welcher der erste und der zweite Überwindungsvorgang beendet sein müssten. Nach dieser Zeitdauer wird zunächst überprüft, ob der erste Versuch des ersten Überwindungsvorgangs erfolgreich durchgeführt wurde oder fehlgeschlagen ist.

Dabei kann vorgesehen sein, dass der fehlgeschlagene erste Versuch des ersten Überwindungsvorgangs erkannt wird, falls anhand von zumindest einem Odometrieparameter des Kraftfahrzeugs erfasst wird, dass sich das erste Rad nach der Zeitdauer nach wie vor in dem ersten Bereich der Parklücke befindet. Dazu kann von der Sensoreinrichtung eine Initialposition des Kraftfahrzeugs erfasst werden, ausgehend von welcher beispielsweise die Parktrajektorie für den zumindest semi-autonomen Einparkvorgang bestimmt wird. Anhand der Odometrieparameter des Kraftfahrzeugs, beispielsweise anhand von Radumdrehungen, kann ausgehend von der Initialposition eine in der bestimmten Zeitdauer von dem ersten Rad zurückgelegte Strecke entlang der Parktrajektorie erfasst werden. Anhand der Odometrieparameter kann also das Kraftfahrzeug auf der Parktrajektorie lokalisiert werden. Wenn sich das erste Rad nach der Zeitdauer nach wie vor in dem ersten Bereich der Parklücke befindet, so wird davon ausgegangen, dass der erste Versuch des ersten Überwindungsvorgangs fehlgeschlagen ist. Dann wird insbesondere das erste Drehmoment für den zweiten Versuch des ersten Überwindungsvorgangs des ersten Rads erhöht. Nach der vorbestimmten Zeitdauer wird dann erneut überprüft, ob der erste Überwindungsvorgang erfolgreich durchgeführt wurde und falls ja, auch überprüft, ob der zweite Überwindungsvorgang des zweiten Rads erfolgreich durchgeführt wurde. Falls ein erster Versuch des zweiten Überwindungsvorgangs fehlgeschlagen ist, so kann das zweite Drehmoment erhöht werden und ein zweiter Versuch für den zweiten Überwindungsvorgang durchgeführt werden.

Die Erfindung betrifft außerdem ein Fahrerassistenzsystem für ein Kraftfahrzeug zum zumindest semi-autonomen Einparken des Kraftfahrzeugs in eine Parklücke aufweisend einen ersten Bereich und einen gegenüber dem ersten Bereich erhöhten zweiten Bereich, wobei das Fahrerassistenzsystem zum Durchführen eines erfindungsgemäßen Verfahrens ausgelegt ist. Das Fahrerassistenzsystem weist zum Durchführen des Verfahrens insbesondere eine Steuereinrichtung auf, welche insbesondere dazu ausgelegt ist, in eine Lenkung sowie insbesondere in ein Antriebs- und Bremssystem des Kraftfahrzeugs einzugreifen und damit das Kraftfahrzeug zumindest semi-autonom zu bewegen.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "über", "auf", "unter", "oberhalb", "vorwärts", "rückwärts", etc. sind für einen vor dem Kraftfahrzeug stehenden und in Längsrichtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs und eine Parklücke; und
- Fig. 2: eine schematische Darstellung eines Ablaufdiagramms einer Ausführungsform des erfindungsgemäßen Verfahrens.

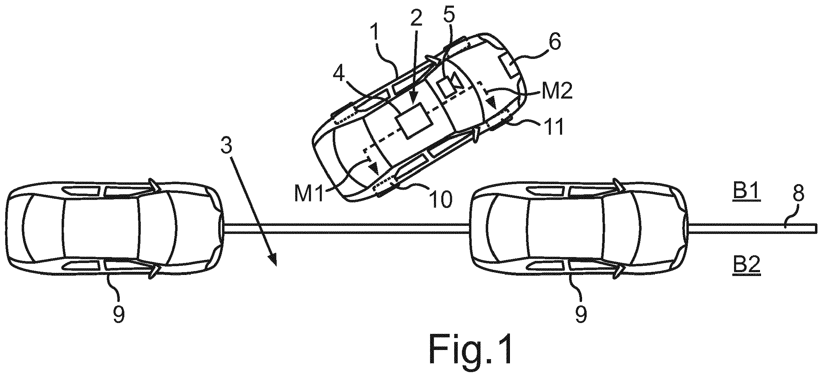

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches einen Fahrer des Kraftfahrzeugs 1 beim zumindest semi-autonomen Einparken in eine Parklücke 3 unterstützt. Das Fahrerassistenzsystem 2 weist hier eine Steuereinrichtung 4 auf, welche beispielsweise durch ein fahrzeugseitiges Steuergerät ausgebildet sein kann. Die Steuereinrichtung 4 ist insbesondere dazu ausgelegt, zum Bereitstellen eines semi-autonomen Einparkvorgangs in eine Lenkung des Kraftfahrzeugs 1 einzugreifen und zum Bereitstellen eines vollautonomen Einparkvorgangs zusätzlich ein Gaspedal und eine Bremse des Kraftfahrzeugs 1 zu betätigen. Das Fahrerassistenzsystem 2 weist hier außerdem zumindest eine Sensoreinrichtung 5, 6 auf, welche zum Überwachen eines Umgebungsbereichs 7 des Kraftfahrzeugs 1 ausgebildet ist. Hier weist das Fahrerassistenzsystem 2 zwei Sensoreinrichtungen 5, 6 auf, wobei eine erste Sensoreinrichtung 5 beispielsweise als eine Kamera ausgebildet ist und eine zweite Sensoreinrichtung 6 beispielsweise als ein Ultraschallsensor ausgebildet ist.

Mittels der fahrzeugseitigen Sensoreinrichtungen 5, 6 kann die Parklücke 3, beispielsweise bei einer Fahrt des Kraftfahrzeugs 1 in Richtung der Parklücke 3, erfasst und vermessen werden. Die Parklücke 3 weist einen ersten Bereich B1 und einen gegenüber dem ersten Bereich B1 erhabenen beziehungsweise erhöhten zweiten Bereich B2 auf. Der zweite Bereich B2 ist also entlang einer Fahrzeughochrichtung oberhalb des ersten Bereiches B1 angeordnet. Die Bereiche B1, B2 sind durch einen Übergang 8 voneinander getrennt, welcher insbesondere durch eine Borsteinkante ausgebildet ist. Im vorliegenden Fall ist die Parklücke 3 als eine Längsparklücke ausgebildet, welche durch zwei Objekte 9 in Form von zwei anderen Fahrzeugen begrenzt wird. Der Übergang 8 ist hier derart in der Parklücke 3 angeordnet, dass das Kraftfahrzeug 1 in einer Parkstellung zumindest teilweise in dem zweiten Bereich B2 positioniert ist. Zum Einnehmen der Parkstellung wird dabei während des Einparkens ein erster Überwindungsvorgang des Übergangs 8 durch ein erstes Rad 10, hier das beifahrerseitige Hinterrad des Kraftfahrzeugs 1, und danach ein zweiter Überwindungsvorgang durch ein zweites Rad 11, hier das beifahrerseitige Vorderrad des Kraftfahrzeugs 1, durchgeführt. In der Parkstellung sind das erste Rad 10 und das zweite Rad 11 des Kraftfahrzeugs 1 auf dem zweiten Bereich B2 angeordnet. Zum Durchführen des ersten Überwindungsvorgangs durch das erste Rad 10 wird ein erstes Drehmoment M1 auf das erste Rad 10 übertragen. Wenn ein erster Versuch des ersten Überwindungsvorgangs fehlschlägt, so wird für den zweiten Überwindungsvorgang des zweiten Rads 11 ein im Vergleich zu dem ersten Drehmoment M1 erhöhtes zweites Drehmoment M2 auf das zweite Rad 11 übertragen.

Dazu wird insbesondere vor Übertragen des zweiten Drehmoments M2 auf das zweite Rad 11 ein zweiter Versuch des ersten Überwindungsvorgangs durchgeführt, bei welchem auf das erste Rad 10 ein erhöhtes erstes Drehmoment übertragen wird. Das erhöhte erste Drehmoment kann dann als das zweite Drehmoment M2 für den zweiten Überwindungsvorgang des zweiten Rads 11 bereitgestellt werden. Es kann aber auch vorgesehen sein, dass das zweite Drehmoment M2 individuell für das zweite Rad 11 bestimmt wird. Insbesondere wird das zweite Drehmoment M2 in Abhängigkeit von zumindest einem Parameter der Parklücke 3 und/oder des Kraftfahrzeugs 1 bestimmt. Beispielsweise kann als der Parameter der Parklücke 3 ein Reibungskoeffizient eine Fahrbahnoberfläche des ersten Bereiches B1 und/oder des zweiten Bereiches B2 bestimmt werden. Alternativ oder zusätzlich kann ein Reifendruck eines Reifens des zweiten Rads 11 bestimmt werden. Auch kann eine Anzahl an Rädern 11 bestimmt werden, welche bei dem zweiten Überwindungsvorgang auf dem zweiten Bereich B2 platziert werden sollen.

Dabei können vorgegebenen Werten des zumindest einen Parameters vorgegebene Gewichtungsfaktoren zugeordnet werden. Ein vorbestimmtes Standarddrehmoment, welches beispielsweise 250 Nm beträgt, kann dann mit einem der Gewichtungsfaktoren, welcher in Abhängigkeit von dem erfassten Wert des zumindest einen Parameters ausgewählt wird, gewichtet werden, wobei das gewichtete Standarddrehmoment als das zweite Drehmoment M2 bestimmt wird. Die vorgegebenen Werte für die Parameter können mit den zugehörigen Gewichtungsfaktoren in jeweiligen Umsetzungstabellen hinterlegt sein. Dazu wird, beispielsweise von der Steuereinrichtung 4, in der Umsetzungstabelle derjenige Wert für den Parameter identifiziert, welcher dem erfassten Wert des Parameters entspricht, und der zugeordnete Gewichtungsfaktor aus der Umsetzungstabelle ausgelesen.

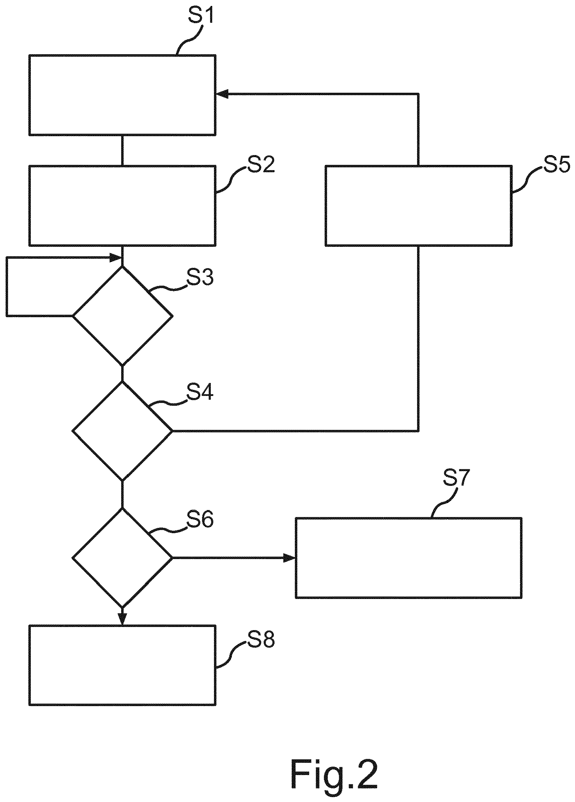

In Fig. 2 ist ein schematisches Ablaufdiagramm für eine Ausführungsform eines Verfahrens zum zumindest semi-autonomen Einparken des Kraftfahrzeugs 1 gezeigt. In einem ersten Schritt S1 des Verfahrens wird das erste Drehmoment M1 für den ersten Überwindungsvorgang des ersten Rads 10 des Kraftfahrzeugs 1 bestimmt. In einem zweiten Schritt S2 wird hier eine Zeitdauer für den ersten und den zweiten Überwindungsversuch bestimmt. Anders ausgedrückt wird die Zeitdauer bestimmt, nach welcher das erste Rad 10 und das zumindest eine zweite Rad 11 auf dem zweiten Bereich B2 positioniert sein sollten. In einem dritten Schritt S3 wird überprüft, ob die in Schritt S2 bestimmte Zeitdauer erreicht ist. Falls nicht, wird Schritt S3 so lange wiederholt, bis die Zeitdauer erreicht ist. Sobald die Zeitdauer erreicht ist, wird in einem vierten Schritt S4 überprüft, ob ein erster Versuch des ersten Überwindungsvorgangs des ersten Rads 10 erfolgreich durchgeführt wurde. Dazu wird überprüft, ob das erste Rad 10 auf dem zweiten Bereich B2 positioniert ist. Die Überprüfung, ob das erste Rad 10 auf dem zweiten Bereich B2 positioniert ist, kann beispielsweise anhand von Odometrieparametern des Kraftfahrzeugs 1 durchgeführt werden.

Falls erfasst wurde, dass das erste Rad 10 nicht auf dem zweiten Bereich B2 positioniert ist, wird in einem fünften Verfahrenschritt S5 ein fehlgeschlagener erster Versuch des ersten Überwindungsvorgangs erfasst und das Verfahren bei dem ersten Schritt S1 erneut begonnen. Dazu wird in dem ersten Schritt S1 ein neues erstes Drehmoment für einen zweiten Versuch des ersten Überwindungsvorgangs bestimmt, welches im Vergleich zu dem ersten Drehmoment M1 des ersten Versuchs erhöht wird. Dieses erhöhte erste Drehmoment wird dann zunächst auf das erste Rad 10 und insbesondere danach auch als das zweite Drehmoment M2 auf das zweite Rad 11 übertragen.

Falls in dem vierten Schritt S4 erfasst wird, dass das erste Rad 10, welches beispielsweise mit dem erhöhten ersten Drehmoment, auf dem zweiten Bereich B2 positioniert ist, so wird in einem sechsten Schritt S6 überprüft, ob der zweite Überwindungsvorgang des zweiten Rads 11 erfolgreich durchgeführt wurde. Dazu wird überprüft, ob das zweite Rad 11 auf dem zweiten Bereich B2 positioniert ist. Die Überprüfung, ob das erste Rad 11 auf dem zweiten Bereich B2 positioniert ist, kann beispielsweise ebenfalls anhand von Odometrieparametern des Kraftfahrzeugs 1 durchgeführt werden. Falls erfasst wurde, dass das zweite Rad 11 nicht auf dem zweiten Bereich B2 positioniert ist, wird in einem siebten Verfahrenschritt S7 der aktuelle zweite Überwindungsvorgang beendet das zweite Rad 11 als erstes Rad betrachtet. Dies bedeutet, dass ein individuelles Drehmoment für einen zweiten Versuch des zweiten Überwindungsvorgangs für das zweite Rad 11 bestimmt wird.

Falls in dem sechsten Schritt S6 erfasst wurde, dass der zweite Überwindungsvorgang von dem zweiten Rad 11 erfolgreich durchgeführt wurde und das zweite Rad 11 auf dem zweiten Bereich B2 positioniert ist, so kann in einem achten Schritt S8 der Einparkvorgang beendet werden und die Parkstellung für das Kraftfahrzeug 1 bereitgestellt werden.

## Patentansprüche

1. Verfahren zum zumindest semi-autonomen Einparken eines Kraftfahrzeugs (1) in eine Parklücke (3) aufweisend einen ersten Bereich (B1) und einen gegenüber dem ersten Bereich (B1) erhöhten zweiten Bereich (B2), wobei ein erstes Rad (10) des Kraftfahrzeugs (1) zum Durchführen eines ersten Überwindungsvorgangs eines Übergangs (8) zwischen dem ersten Bereich (B1) und dem zweiten Bereich (B2) mit einem ersten Drehmoment (M1) beaufschlagt wird,
wobei zumindest ein zweites Rad (11) des Kraftfahrzeugs (1) mit einem im Vergleich zu dem ersten Drehmoment (M1) größeren zweiten Drehmoment (M2) zum Durchführen eines zweiten Überwindungsvorgangs des Übergangs (8) beaufschlagt wird, falls erkannt wird, dass ein erster Versuch des ersten Überwindungsvorgangs des mit dem ersten Drehmoment (M1) beaufschlagten ersten Rads (10) fehlgeschlagen ist,
**dadurch gekennzeichnet, dass**
das zweite Drehmoment (M2) für das zumindest eine zweite Rad (11) in Abhängigkeit von zumindest einem das Kraftfahrzeug (1) und/oder die Parklücke (3) charakterisierenden Parameter bestimmt wird, wobei als der zumindest eine Parameter ein Reibungskoeffizient des ersten Bereiches (B1) bestimmt wird.

2. Verfahren nach Anspruch 1,
**dadurch gekennzeichnet, dass**
das erste Drehmoment (M1) für das erste Rad (10) für einen zweiten Versuch des ersten Überwindungsvorgangs erhöht wird, und das erhöhte erste Drehmoment als das zweite Drehmoment (M2) für den zweiten Überwindungsvorgang des zumindest einen zweiten Rads (11) bereitgestellt wird.

3. Verfahren nach Anspruch 1,
**dadurch gekennzeichnet, dass**
als der zumindest eine Parameter eine Orientierung des Kraftfahrzeugs (1) bezüglich der Parklücke (3) bestimmt wird.

4. Verfahren nach Anspruch 1 oder 3,
**dadurch gekennzeichnet, dass**
als der zumindest eine Parameter eine Antriebsvariante des Kraftfahrzeugs (1) bestimmt wird.

5. Verfahren nach einem der Ansprüche 3 bis4,
**dadurch gekennzeichnet, dass**
als der zumindest eine Parameter eine Anzahl an Rädern (11) für den zweiten Überwindungsvorgang bestimmt wird und/oder ein Reifendruck eines Reifens des zumindest einen zweiten Rads (11) bestimmt wird.

6. Verfahren nach einem der Ansprüche 3 bis 5,
**dadurch gekennzeichnet, dass**
als der zumindest eine Parameter eine Anzahl an erfolglosen Versuchen des ersten Überwindungsvorgangs des ersten Rads (10) bestimmt wird.

7. Verfahren nach einem der vorhergehenden Ansprüche,
**dadurch gekennzeichnet, dass**
eine Zeitdauer zumindest für den ersten Überwindungsvorgang des ersten Rads (10) bestimmt wird und nach der Zeitdauer überprüft wird, ob der erste Versuch des ersten Überwindungsvorgangs fehlgeschlagen ist.

8. Verfahren nach Anspruch 7,
**dadurch gekennzeichnet, dass**
der fehlgeschlagene erste Versuch des ersten Überwindungsvorgangs erkannt wird, falls anhand von zumindest einem Odometrieparameter des Kraftfahrzeugs (1) erfasst wird, dass sich das erste Rad (10) nach der Zeitdauer in dem ersten Bereich (B1) der Parklücke (3) befindet.

9. Fahrerassistenzsystem (2) für ein Kraftfahrzeug (1) zum zumindest semi-autonomen Einparken des Kraftfahrzeugs (1) in eine Parklücke (3) aufweisend einen ersten Bereich (B1) und einen gegenüber dem ersten Bereich (B1) erhöhten zweiten Bereich (B2), wobei das Fahrerassistenzsystem (2) zum Durchführen eines Verfahrens nach einem der vorhergehenden Ansprüche ausgelegt ist.

10. Kraftfahrzeug (1) mit einem Fahrerassistenzsystem (2) nach Anspruch 9.

## Claims

1. Method for at least semi-autonomous parking of a motor vehicle (1) in a parking space (3) having a first region (B1) and a second region (B2) which is raised compared with the first region (B1) wherein a first torque (M1) is applied to a first wheel (10) of the motor vehicle (1) in order to carry out a first overcoming process of a junction (8) between the first region (B1) and the second region (B2), wherein a second torque (M2) higher than the first torque (M1) is applied to at least one second wheel (11) of the motor vehicle (1) in order to carry out a second overcoming process of the junction (8) if it is detected that a first attempt at the first overcoming process of the first wheel (10) to which the first torque (M1) was applied has failed,
**characterized in that**
the second torque (M2) for the at least one second wheel (11) is determined as a function of at least one parameter which characterises the motor vehicle (1) and/or the parking space (3), wherein a coefficient of friction of the first region (B1) is determined as the at least one parameter.

2. Method according to Claim 1,
**characterized in that**
the first torque (M1) for the first wheel (10) is increased for a second attempt at the first overcoming process, and the increased first torque is made available as the second torque (M2) for the second overcoming process of the at least one second wheel (11).

3. Method according to Claim 1,
**characterized in that**
an orientation of the motor vehicle (1) with respect to the parking space (3) is determined as the at least one parameter.

4. Method according to Claim 1 or 3,
**characterized in that**
a drive variant of the motor vehicle (1) is determined as the at least one parameter.

5. Method according to one of Claims 3 to 4,
**characterized in that**
a number of wheels (11) for the second overcoming process is determined as the at least one parameter and/or a tyre pressure of a tyre of the at least one second wheel (11) is determined.

6. Method according to one of Claims 3 to 5,
**characterized in that**
a number of unsuccessful attempts at the first overcoming process of the first wheel (10) is determined as the at least one parameter.

7. Method according to one of the preceding claims,
**characterized in that**
a time period at least for the first overcoming process of the first wheel (10) is determined, and after the time period it is checked whether the first attempt at the first overcoming process has failed.

8. Method according to Claim 7,
**characterized in that**
the failed first attempt at the first overcoming process is detected if it is sensed, on the basis of at least one odometry parameter of the motor vehicle (1), that after the time period the first wheel (10) is located in the first region (B1) of the parking space (3).

9. Driver assistance system (2) for a motor vehicle (1) for at least semi-autonomous parking of the motor vehicle (1) in a parking space (3) having a first region (B1) and a second region (B2) which is raised compared with the first region (B1), wherein the driver assistance system (2) is configured to carry out a method according to one of the preceding claims.

10. Motor vehicle (1) having a driver assistance system (2) according to Claim 9.

## Revendications

1. Procédé d'entrée en stationnement au moins semi-autonome d'un véhicule automobile (1) dans un emplacement de stationnement (3) possédant une première zone (B1) et une deuxième zone (B2) surélevée par rapport à la première zone (B1), une première roue (10) du véhicule automobile (1) étant sollicitée avec un premier couple (M1) en vue de réaliser une première manoeuvre de franchissement d'une transition (8) entre la première zone (B1) et la deuxième zone (B2),
au moins une deuxième roue (11) du véhicule automobile (1) étant sollicitée avec un deuxième couple (M2) plus important en vue de réaliser une deuxième manoeuvre de franchissement de la transition (8) en cas de détection du fait qu'une première tentative de la première manoeuvre de franchissement de la première roue (10) sollicitée avec le premier couple (M1) a échoué,
**caractérisé en ce que**
le deuxième couple (M2) pour l'au moins une deuxième roue (11) est déterminé en fonction d'au moins un paramètre qui caractérise le véhicule automobile (1) et/ou l'emplacement de stationnement (3), l'au moins un paramètre déterminé étant un coefficient de frottement de la première zone (B1).

2. Procédé selon la revendication 1, **caractérisé en ce que** le premier couple (M1) pour la première roue (10) est augmenté pour une deuxième tentative de la première manoeuvre de franchissement, et le premier couple accru est fourni en tant que deuxième couple (M2) pour la deuxième manoeuvre de franchissement de l'au moins une deuxième roue (11).

3. Procédé selon la revendication 1, **caractérisé en ce que** l'au moins un paramètre déterminé est une orientation du véhicule automobile (1) par rapport à l'emplacement de stationnement (3).

4. Procédé selon la revendication 1 ou 3, **caractérisé en ce que** l'au moins un paramètre déterminé est une variante de propulsion du véhicule automobile (1).

5. Procédé selon l'une des revendications 3 à 4, **caractérisé en ce que** l'au moins un paramètre déterminé est un nombre de roues (11) pour la deuxième manoeuvre de franchissement et/ou une pression de pneu d'un pneumatique de l'au moins une deuxième roue (11).

6. Procédé selon l'une des revendications 3 à 5, **caractérisé en ce que** l'au moins un paramètre déterminé est un nombre de tentatives ayant échoué de la première manoeuvre de franchissement de la première roue (10).

7. Procédé selon l'une des revendications précédentes, **caractérisé en ce qu'**une durée est déterminée au moins pour la première manoeuvre de franchissement de la première roue (10) et un contrôle est effectué après la durée afin de vérifier si la première tentative de la première manoeuvre de franchissement a échoué.

8. Procédé selon la revendication 7, **caractérisé en ce que** l'échec de la première tentative de la manoeuvre de franchissement est reconnu si au moins un paramètre d'odométrie du véhicule automobile (1) amène à détecter que la première roue (10), après la durée, se trouve dans la première zone (B1) de l'emplacement de stationnement (3) .

9. Système d'assistance au conducteur (2) pour un véhicule automobile (1) destiné à l'entrée en stationnement au moins semi-autonome d'un véhicule automobile (1) dans un emplacement de stationnement (3) possédant une première zone (B1) et une deuxième zone (B2) surélevée par rapport à la première zone (B1), le système d'assistance au conducteur (2) étant conçu pour mettre en oeuvre un procédé selon l'une des revendications précédentes.

10. Véhicule automobile (1) équipé d'un système d'assistance au conducteur (2) selon la revendication 9.
